# EUROPEAN PATENT SPECIFICATION

(11) **EP 0 655 793 B1**
(45) Date of publication and mention of the grant of the patent: **02.04.2003**
(21) Application number: 94308499.6
(22) Date of filing: 17.11.1994
(51) Int. Cl.: H01M 6/10, H01M 2/26, H01M 2/04

(54) **High-reliability electrochemical cell and electrode assembly therefor**
Elektrochemische Zelle mit hoher Zuverlässigkeit und Elektrodenanordnung hierfür
Cellule électrochimique à haute sécurité de fonctionnement et son assemblage d'électrodes

(30) Priority: 19.11.1993 US 155410; 19.11.1993 US 155404; 19.11.1993 US 155418
(43) Date of publication of application: 31.05.1995
(73) Proprietor: MEDTRONIC, INC., Minneapolis, Minnesota 55432-3576 (US)
(72) Inventor: Howard, William G, Roseville, Minnesota 55113 (US); Kelm, Roger W., New Richmond, Wisconsin 54017 (US); Weiss, Douglas J., Plymouth, Minnesota 55433 (US); Crespi, Ann M., Minneapolis, Minnesota 55417 (US); Berkowitz, Fred J., Champlin, Minnesota 55316 (US); Skarstad, Paul M., Plymouth, Minnesota 55316 (US); Herting, Vernon L., Andover, Minnesota (US)
(74) Representative: Tomlinson, Kerry John

(56) References cited:
- EP-A- 0 136 886
- EP-A- 0 237 146
- EP-A- 0 503 969
- EP-A- 0 532 312
- WO-A-89/12327
- DE-A- 1 496 244
- FR-A- 1 583 202
- GB-A- 2 184 594
- US-A- 4 283 843
- PATENT ABSTRACTS OF JAPAN vol. 17, no. 398 (E-1403), 26 July 1993 & JP-A-05 074496 (ASAHI CHEM IND CO LTD)
- PATENT ABSTRACTS OF JAPAN vol. 16, no. 124 (E-1183), 30 March 1992 & JP-A-03 291862 (MATSUSHITA ELECTRIC IND CO)
- PATENT ABSTRACTS OF JAPAN vol. 15, no. 90 (E-1040), 5 March 1991 & JP-A-02 304863 (SANYO ELECTRIC CO LTD)
- PATENT ABSTRACTS OF JAPAN vol. 18, no. 355 (E-1573), 5 July 1994 & JP-A-06 096801 (MATSUSHITA ELECTRIC IND CO)
- PATENT ABSTRACTS OF JAPAN vol. 17, no. 398 (E-1403), 26 July 1993 & JP-A-05 074498 (ASAHI CHEM IND CO LTD)
- PATENT ABSTRACTS OF JAPAN vol. 7, no. 4 (E-151), 8 January 1983 & JP-A-57 163965 (SANYO DENKI KK)

## Description

This invention relates to electrochemical cells having an alkaline metal anode and particularly, but not exclusively, to a primary lithium electrochemical cell adapted for high reliability and high rates of current discharge.

Implantable cardiac defibrillators are used to treat patients suffering from ventricular fibrillation, a chaotic heart rhythm that can quickly result in death if not corrected. In operation, the defibrillator device continuously monitors the electrical activity of the heart of the patient, detects ventricular fibrillation, and in response to that detection, delivers appropriate shocks to restore a normal heart rhythm. Shocks as large as 30-35 joules may be needed. Shocks are delivered from capacitors capable of providing that energy to the patient in a fraction of a second. In order to provide timely therapy to the patient after the detection of ventricular fibrillation, it is necessary to charge the capacitors with the required amount of energy in only a few seconds. Thus, the power source must have a high rate capability to provide the necessary charge to the capacitors, it must also possess low self-discharge in order to have a useful life of many months, and it must be highly reliable to provide an urgently needed therapy whenever necessary. In addition, since cardiac defibrillators are implanted, the battery must be able to supply energy from a minimum packaged volume.

One battery suitable for defibrillator use is disclosed in U.S. Patent 4,830,940 to Keister et al. As disclosed therein, the anode material of the battery is lithium and the reactive cathode material is silver vanadium oxide. The anode is constructed in a serpentine-like fashion with cathode plates inserted between each of the convolutions thereof on both sides thereof. The electrolyte for a lithium battery or cell is a liquid organic type which comprises a lithium salt and an organic solvent. Both the anode and the cathode plates are encapsulated in an electrically insulative separator material. However, a disadvantage of this battery design is that the serpentine anode is not efficiently used since anode material at the bends is.not faced by cathode material and is therefore not fully utilized. An improvement which addresses this problem is disclosed in U.S. Patent 5,147,737 to Post et al, in which the active material on the serpentine-type electrode is positioned so that the sections of the serpentine-like structure which do not face cathode plates do not contain anode active material. However, the serpentine bends of the anode are still present to the detriment of volumetric efficiency. Additional problems with these battery designs include the number of piece parts and connections required to make the battery which can affect both the manufacturability and the reliability of the battery; and the difficulty of achieving good current distribution and utilization of reactive material due to the unmatched configurations of the anode and cathode.

Conventional lithium batteries can also employ an electrode body in which anode and cathode elements are combined in spiral wound form. A strip sheet of lithium or lithium alloy comprises the anode, a cathode material supported on a charge collecting metal screen comprises the cathode, and a sheet of non-woven material separates the anode and cathode elements. These elements are combined and wound to form a spiral. Typically, the battery configuration for such a wound electrode would be cylindrical. For example, such configurations can be found in U.S. Patents 3,373,060; 3,395,043; 3,734,778; 4,000,351; 4,184,012; 4,332,867; 4,333,994; 4,539,271; 4,550,064; 4,663,247; 4,668,320; 4,709,472; 4,863,815; 5,008,165; 5,017,442; and 5,053,297. Unlike the battery of the '940 patent, there need not be anode material which is not mated to. cathode material. Such designs therefore have the potential for an improved match between the cathode and anode components and improved uniformity of anode and cathode utilization during discharge. However, cylindrical cells would not achieve the same space utilization inside the case of an implantable defibrillator as a prismatic cell shape.

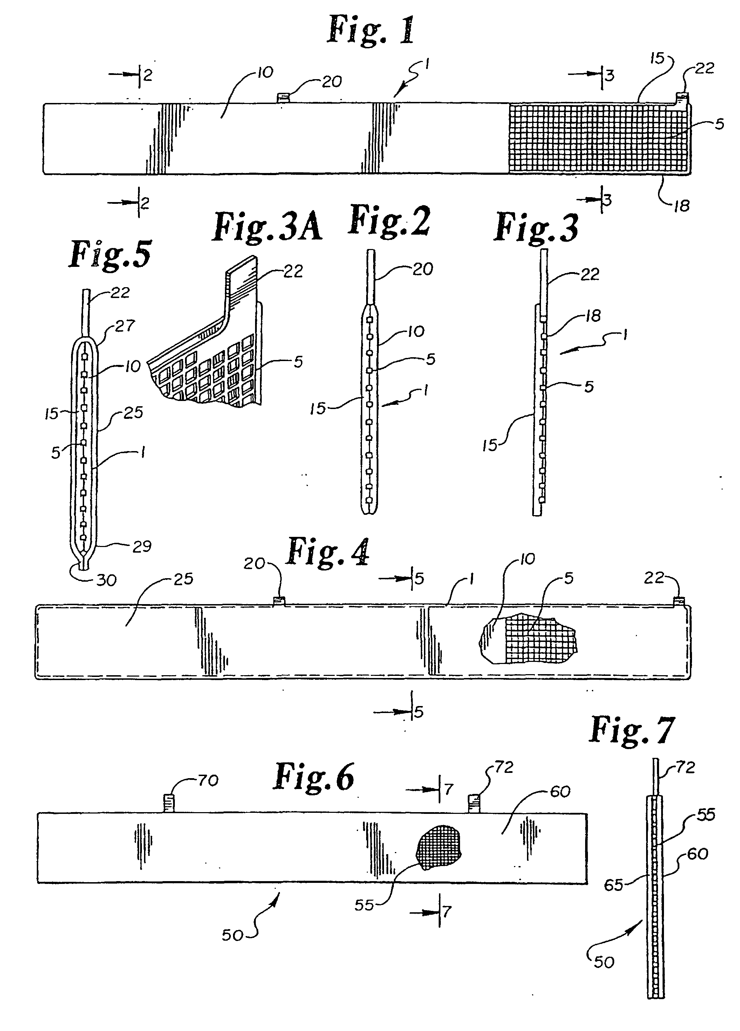

It has also been known to adapt wound electrodes to a prismatic case configuration by departing from a true spiral winding. For example, U.S. Patent 2,928,888 discloses in figures 5a and 5b therein an oblong electrode assembly wound on an elongated mandrel for use in a rectangular case. Also, for example, U.S. Patent 4,051,304 discloses in figure 2 therein another oblong wound electrode assembly for use in a rectangular case. However, these patents do not indicate that such structures could be advantageously used for a high current rate capability lithium battery or that they provide a uniform utilization of reactive anode and cathode material during discharge.

It is therefore an object of the present invention to provide a high current rate capability lithium battery having a coiled electrode suitable for use in a prismatic case.

It is also an object of the present invention to provide a high current rate capability lithium battery which provides uniform utilization of cathode and anode materials during discharge.

It is also an object of the present invention to provide a high current rate capability lithium battery for use in implantable cardiac defibrillators which employs a reduced number of piece parts and welds when compared with prior art devices.

These and other objects are accomplished by the electrochemical cell and electrode assembly of the present invention.

According to one aspect of the present invention, there is provided an electrode assembly for an electrochemical cell comprising:
(a) an anode including
   (1) an elongate strip of alkali metal; and
   (2) separator material provided on the alkali metal; and
(b) a cathode assembly including
   (1) a cathode current collector; and
   (2) a cathode material bonded at a uniform density of reactive material to the current collector; characterised in that the cathode assembly is shorter than the anode, the anode and the cathode assembly being combined with the separator material therebetween, in a flat spiral coil winding with two substantially straight sides, the winding having:
      (a) at the innermost portion thereof a portion of the anode folded over the end of the cathode assembly into contact with both sides of the cathode assembly, the folded over portion establishing the length of the straight sides of the winding; and
      (b) at the outermost portion thereof, the anode wrapped around the cathode assembly.

According to another aspect, there is provided a method for making an electrode assembly for an electrochemical cell comprising the steps of:
(a) providing an anode comprising an elongate alkali metal strip;
(b) pressing a porous separator material into the anode (1);
(c) providing a cathode assembly comprising a second metal strip with a reactive cathode material bonded to it at a uniform density of reactive material; and
(d) winding the anode and the cathode assembly together, into a flat spiral coil; characterised in that
the winding step also includes the steps of:
(i) placing a flat mandrel against one side of the cathode assembly such that a first end of the mandrel is aligned with an end of the cathode assembly;
(ii) placing a separator material around the cathode assembly such that it is wound between the anode and cathode assembly,
(iii) placing the anode against the cathode assembly on a side of the cathode opposite to that against the mandrel such that the first end of the anode extends beyond the end of the cathode assembly by substantially the same amount as the length of the mandrel;
(iv) bending the anode over the end of the cathode assembly and over the end of the mandrel such that the anode is against the mandrel on a side of the mandrel opposite to the side of the mandrel against the cathode assembly;
(v) bending both the anode) and cathode assembly ) around the mandrel at a second end of the mandrel until it rests against the anode;
(vi) continuing to wind the anode and cathode assembly around the mandrel in the same direction until the second end of the anode is brought against the winding to complete the winding;
(vii) removing the mandrel from the completed winding:

The cathode assembly is shorter than the anode so that the anode and cathode can be wound by superimposing them with a separator material placed between them and then winding them by making an initial fold in the anode over the end of the cathode assembly and a mandrel to establish the length of the straight sides of the winding. The anode and cathode are then wound together unidirectionally until at the outermost portion of the winding the thin portion of the anode is the outer layer of the electrode assembly. The mandrel is then removed to allow both sides of the initial portion of the anode assembly to contact the cathode assembly. This electrode assembly allows for even utilization of reactive material by placing cathode and anode material in close proximity throughout the electrode assembly in the proportions in which they are utilized. It preferably also contributes to even utilization of reactive material by employing multiple tabs on the cathode assembly to ensure that cathode material is utilized throughout the electrode assembly. This is particularly important' in the cathode since the current collector is being relied upon to provide conductivity throughout the cathode; conductivity that may not be inherently good in metals chosen largely for their corrosion-resistance. Preferably, the tabs are placed on the anode and cathode such that in the final winding the anode tabs are on one side of the winding while the cathode tabs are on the opposite side of the winding. This facilitates connection between the electrode and other battery components and avoids short circuits.

In this assembly, it is also preferred to include various structures to promote additional reliability for implantable medical devices. For example, the anode preferably also includes an anode current collector which is bonded on a first side to a length of reactive anode metal having a uniform thickness and on a second side to a second, shorter length of reactive anode metal having a uniform thickness. In the winding, the second side of the current collector with the shorter length of reactive metal faces the outside of the winding since reactive material is not needed on the outside of the last turn of the winding. Also, for example, the anode and cathode are preferably both enclosed within a pouch of separator material having an opening through which the connector tab of the electrode projects. The separator pouch then prevents the transport of stray material into the cell which could cause a short circuit and the double thickness of separator between anode and cathode elements better resists damage during the winding process that could otherwise cause shorting during battery operation.

When the electrode assembly described above is incorporated in an electrochemical cell, the electrode assembly can be placed into a prismatic battery case having parallel, substantially straight sides. If the case is made of metal, a closely-fitting preform of non-conductive material should be placed inside the case between the electrode assembly and the metal of the case to insulate the electrode elements from the case. A feedthrough can be attached to the case by an insulative seal and connected to the tabs of either the anode or cathode of the electrode assembly. The tabs of the other electrode of the assembly can be welded to a second feedthrough or to the case.

The actual winding process for the electrode assembly can be done by hand winding or by machine winding. A thin mandrel is used in the winding process and is removed following the completion of the winding process.

In another aspect of the invention, the anode includes an elongated strip of alkali metal which is combined with a separator material by pressing the separator material into the alkali metal under pressure. The cathode assembly . includes a cathode current collector and a cathode material bonded to the current collector at a uniform density of reactive material. In this assembly, it is also preferred to include various structures to promote additional reliability for implantable medical devices. For example, the anode preferably also includes an anode current collector which is bonded on a first side to a length of reactive anode metal having a uniform thickness and on a second side to a second, shorter length of reactive anode metal having a uniform thickness. Also, for example, the anode and cathode are preferably both enclosed within a pouch of separator material. The separator pouch then prevents the transport of stray material in the cell which could cause a short circuit and the double thickness of separator between anode and cathode elements better resists damage during the winding process.

Three barriers of nonconductive material are established to isolate the various components. A coil insulator having openings to accommodate the anode and cathode connector tabs is positioned over the end of the winding with the anode and cathode connector tabs projecting through it, thereby providing a first nonconductive barrier which isolates the connector tabs from the winding. A feedthrough with a single feedthrough pin is positioned to connect with both cathode connector tabs and is welded to both connector tabs. The glass seal of the feedthrough is insulated and the feedthrough pin is insulated between the glass seal and the first weld thereby providing a second nonconductive barrier which isolates the feedthrough and feedthrough pin from the case and from the anode connector tab. In the vicinity of the welds, a third nonconductive barrier is established to separate the connections to the cathode connector tabs from the anode connector tab and from the case. The insulated portion of the feedthrough pin passes through an aperture in the third nonconductive barrier, thereby completely isolating the cathode connections from the case and from the anode connector tab.

Preferred embodiments of the invention will now be described by way of example only with reference to the accompanying drawings.

Fig. 1 is a side view of an anode component used in the present invention.

Fig. 2 is a cross sectional view of a first portion of the anode of Fig. 1.

Fig. 3 is a cross sectional view of a second portion of the anode of Fig. 1.

Fig. 3A is a detail view of the electrode tab of the anode of Fig. 1.

Fig. 4 is a partially cut-away side view of a combined anode and separator used in the present invention.

Fig. 5 is a is a cross sectional view of the anode and separator of Fig. 4.

Fig. 6 is a partially cut-away side view of a cathode assembly used in the present invention.

Fig. 7 is a cross sectional view of the cathode assembly of Fig. 6.

Fig. 8 is a partially cut-away side view of a combined cathode assembly and separator used in the present invention.

Fig. 9 is a cross sectional view of the combined cathode assembly and separator of Fig. 8.

Fig. 10 is a top view of the mandrel, cathode assembly and anode assembly ready to be wound.

Fig. 11 is a top view of the end portion of the mandrel, cathode assembly and anode assembly of Fig 10 showing the direction of the bend for the anode about the cathode and mandrel.

Fig. 12 is a top view of the end portion of the mandrel, cathode assembly and anode assembly of Fig. 11 showing the use of additional separator material at the anode bend.

Fig. 13 is a top view of the end portion of the mandrel, cathode assembly and anode assembly showing the completed bend from Fig. 11.

Fig. 14 is a perspective view of the completed electrode assembly according to the present invention.

Fig. 15 is a top view of the windings of the electrode assembly (not showing the separator material between the winding elements) and the position of the mandrel in the windings prior to its removal.

Fig. 16 is an exploded perspective view showing the insertion of the electrode assembly into the battery case together with insulator materials.

Fig. 17 is an exploded perspective view showing the application of the insulator and case top to the case and electrode assembly of Fig. 16.

Fig. 18 is a partial cut-away perspective view of the completed battery showing the connection of the tabs of the electrode with the case elements.

Fig. 19 is a partial cut-away perspective view of the isolation components for the battery.

Fig. 20 is a perspective view of an alternative form for isolation components for the battery.

Referring now to the drawings, Figs. 1-6 show the anode portion of the electrode assembly. In Fig. 1, the elongated anode assembly 1 is shown including a current collector 5 which has a first layer of alkali metal 10 on one side and a second layer of alkali metal 15 on the other side. The alkali metal 10, 15 is preferably lithium metal or an alloy of lithium pressed onto the screen current collector 5. Fig. 2 shows in cross section the sandwich structure of the anode assembly 1 with the current collector 5 interposed between the first and second layers of alkali metal 10, 15. Fig. 3 shows in cross section that the anode assembly 1 has at one end 18 only alkali metal 15 on one side of the current collector 5. The bare portion of the current collector 5 will form the outer wrap of the wound electrode assembly since no active material is required for that surface. The current collector 5 is a conductive metal that is corrosion-resistant when associated with the alkali metal 10, 15, preferably nickel, copper or an alloy of nickel or copper. First and second connector tabs 20, 22 project from the edge of the current collector although a single connector tab may also be used since the conductivity of lithium metal on a nickel or copper current collector is capable of providing adequate current distribution at high discharge rates if the current collector has an adequate conductive cross sectional area for its length. Additional connector tabs may also be added if improved reliability of connections is desired. The connector tabs 20, 22 can be incorporated into the current collector 5 when formed as shown in Fig. 3A. The current collector 5 is preferably made by an etching process which provides smooth edges on the current collector 5 and thereby eliminates stray metal pieces which may otherwise poke through the separator material and cause shorting of the battery. An alternative to the anode assembly 1 depicted is to dispense with the current collector 5 in favor of an anode which is made up almost entirely of an alkali metal or alkali metal alloy. In such a configuration, the alkali metal would be formed in a thicker cross-section at one end than at another and the connector tabs would be connected directly to the alkali metal.

Figs. 4 and 5 show the anode assembly 1 covered by separator 25. Separator 25 forms a pocket around the anode assembly 1 since it folds over at the top edge 27 and conforms to the anode assembly 1 until it reaches the bottom edge 29 where it is joined to itself at a seal 30. Slits (not shown) can be cut in the separator 25 to allow the connector tabs 20, 22 to project through the separator 25. The material used in the separator 25 can be a commercially available microporous polyolefin (i.e. polyethylene or polypropylene) separator material such as Celgard 4560 (a microporous/nonwoven laminate material made by Hoechst Celanese). Preferably, the nonwoven side of separator 25 is pressed into the surface of the alkali metal 10, 15 of the anode assembly 1 such that the alkali metal deforms into intimate contact with the separator 25 and bonds to the separator 25.

This deformation bonding can be accomplished by pressing the nonwoven side of separator 25 onto the alkali metal 10, 15 in a hydraulic press. It can be accomplished in the same pressing operation in which the alkali metal 10, 15 is pressed onto the current collector 5. In preparation for the pressing operation, the alkali metal 10, 15 sheets are cut to size, weighed and placed on either side of the current collector 5 in a die. The die and the anode components 5, 10, 15 are then placed in a rolling fixture which presses the alkali metal 10, 15 onto the current collector at a pressure sufficient to hold them in place. The separator 25 is then placed around the anode assembly 1 and is pressed onto the alkali metal 10, 15 on the anode assembly 1 by a hydraulic press at a pressure that deforms the anode metal into intimate contact with the separator. For example, about 5.6x10⁵kg/m² (800 psi) could be used.

The seal 30 for the separator can be a heat seal made by conventional heat sealing equipment.

Referring now to Figs. 6-9 which show the elongated cathode assembly 50, the cathode assembly 50 includes a current collector 55 onto which layers 60, 65 of a cathode material are pressed. The cathode assembly 50 has essentially the same width as the anode assembly 1. The cathode material includes a solid reactive cathode ingredient such as manganese dioxide, V₆O₁₃, silver vanadium oxide, or CFₓ and dry mixtures including such materials together with such binders and conductivity enhancers as may be desirable. Preferably, the silver vanadium oxide used is that disclosed in U.S. Patent 5,221,453 issued to Crespi. For example, in a battery employing silver vanadium oxide as a reactive cathode ingredient, about 5% PTFE could be added as a binder along with about 2% carbon black and 2% graphite as conductivity enhancers. The particulate ingredients can be mixed together, dried to a desired moisture content, placed in a uniform layer over the current collector 55 and then dry pressed in a high pressure press to form each of the cathode material layers 60, 65. Alternatively, wet processes known in the art could also be used in which a wet mix of cathode material is deposited on the current collector 55 and then dried and rolled to form each of the cathode material layers 60, 65. Connector tabs 70, 72 project from the edge of the current collector 55 in substantially the same manner as in the anode assembly 1 described above. The current collector 55 is a conductive metal that is corrosion-resistant when associated with the cathode material, preferably titanium, stainless steel or an alloy of titanium. A separator 75 forms a pocket around the cathode assembly 50 in the same manner as that for the anode assembly 1 above and is provided with a seal 80. The material used in the separator 75 can be the same commercially available microporous polyolefin (i.e. polyethylene or polypropylene) separator material as is used for the anode assembly 1 and the seal 80 can be a heat seal of the material. Preferably, the separator 75 for the cathode assembly 50 is made slightly larger than the cathode assembly to allow for swelling of the cathode material 60, 65 as the battery is discharged and to keep it from splitting as the battery is discharged. This is in contrast with the separator 25 for the anode assembly 1 which can be tightly fitting around the anode assembly 1.

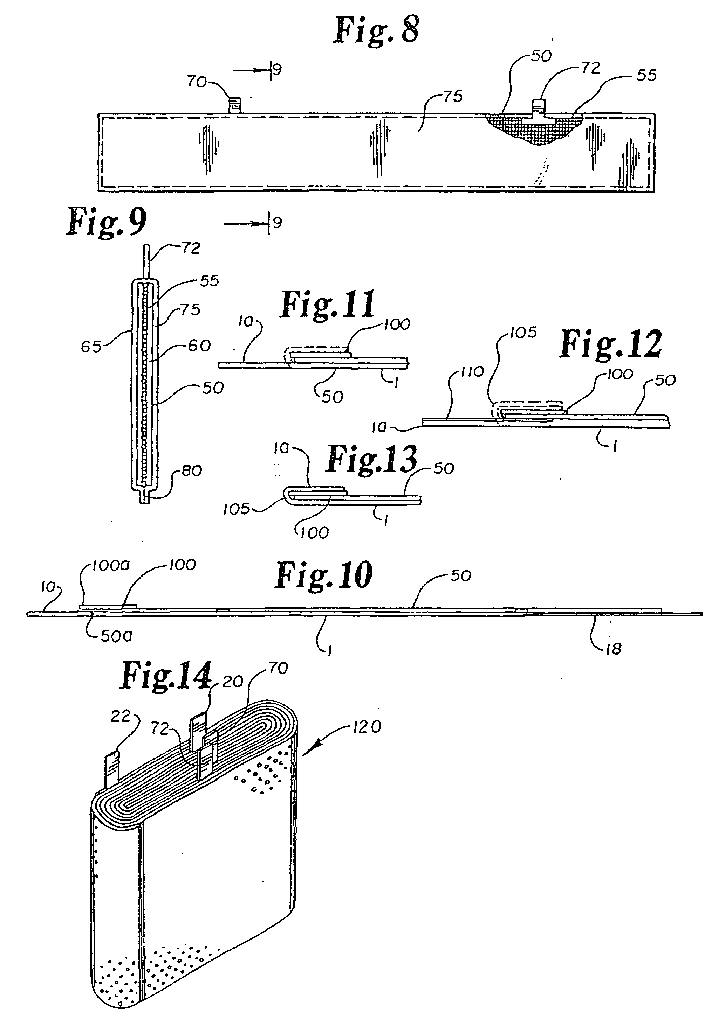

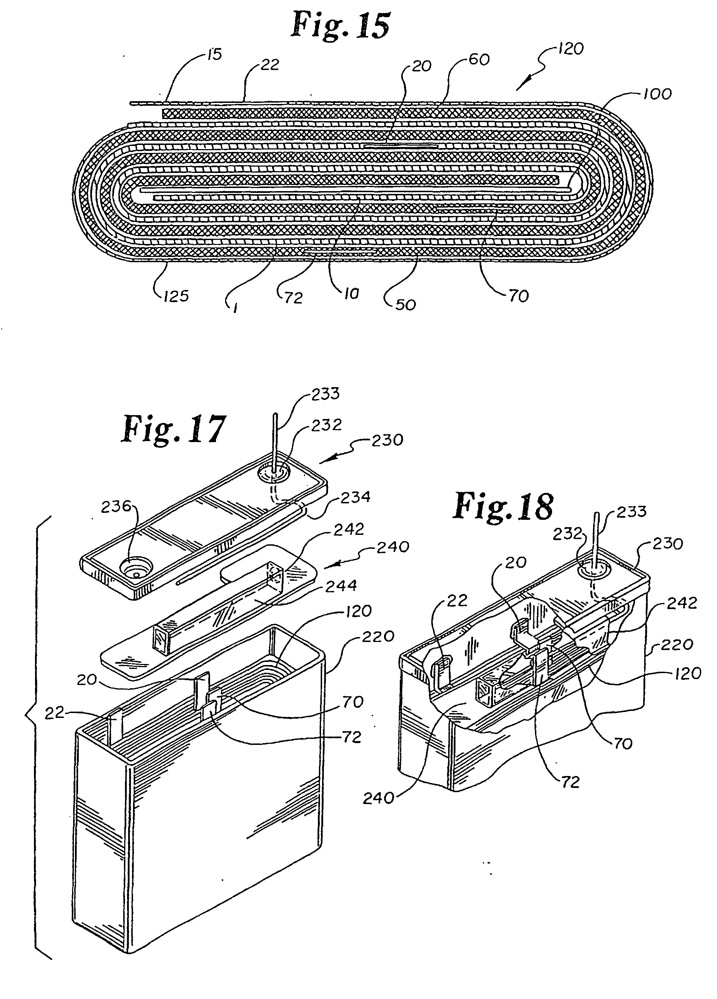

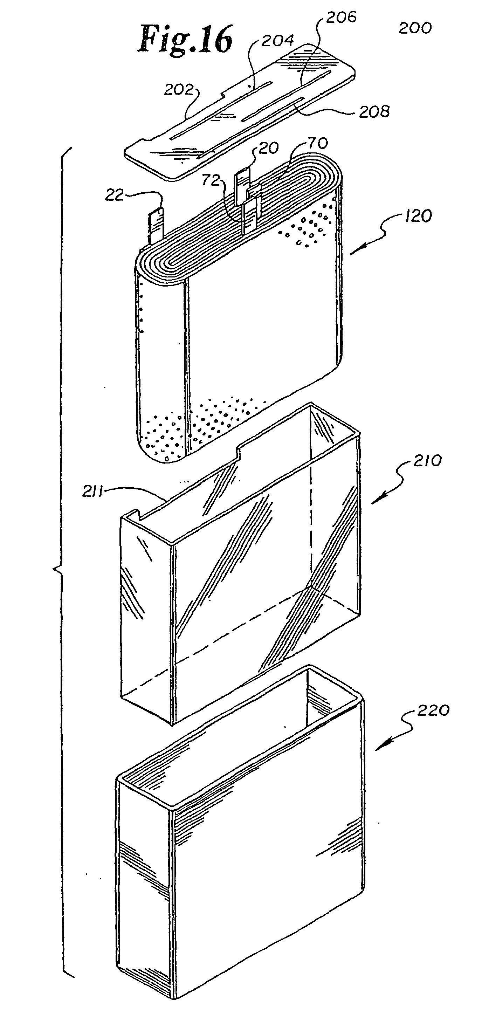

Figs. 10-13 indicate how the winding process is to be started. Fig. 10 shows the anode assembly 1 which has been aligned with the cathode assembly 50 and the mandrel 100 in order to commence the winding operation. The separators 25, 75 for these components are in place around the anode assembly 1 and the cathode assembly 50 respectively during the winding operation although they are not shown. It should be noted that the anode assembly 1 is longer than the cathode assembly 50 and has been positioned at one end 1a to overlap the corresponding end 50a of the cathode assembly 50. The end 50a of the cathode assembly 50 has been positioned slightly behind the edge 100a of the mandrel 100. The anode assembly 1 has also been placed against the cathode assembly 50 such that the alkali metal layer 15 is against cathode material layer 60 at the end 18 of the anode assembly 1. This will ensure that the outer winding of the electrode assembly has an alkali metal layer 15 facing the cathode material 60 and the bare current collector 5 at the end 18 will face outward. As shown in Figs. 11 and 13, the winding process is commenced by bending end 1a of the anode assembly 1 onto the mandrel 100. As shown, the bend 105 also bends the anode assembly 1 around the end of the cathode assembly. A minor alternative (not shown) to this bending procedure that may be useful when making the bend by hand is to first bend the anode assembly 1 over the mandrel 100 in the absence of the cathode assembly 50 (but including a spacer of equivalent thickness to the cathode assembly 50 to make the proper bend radius on the anode assembly 1) and then to remove the spacer and slip the cathode assembly 50 between the mandrel 100 and the anode assembly.

It may be desirable to place additional separator material between the anode assembly 1 and the cathode assembly 50 and between the anode assembly and the mandrel 100 to provide smoother bends. This can be accomplished as shown in Fig. 12 where additional separator material 110 has been placed over the anode assembly 1 and between the anode assembly 1 and cathode assembly 50 at the point where the bend 105 is to be made. A most convenient method for adding the additional separator material 110 is to merely make a longer separator 25 and extend the separator 25 for the anode assembly 1 beyond the length of the anode assembly 1 at the appropriate end 1a and to simply fold the separator back along the anode assembly 1, thus providing a triple thickness of separator material at the point of the bend 105.

The winding then proceeds by winding the combined anode assembly 1 and cathode assembly 50 around the mandrel unidirectionally until the electrode assembly is completed. It is essential that the winding process be carried out by a method which will result in consistent winding tension. Uneven winding tension can cause higher and lower resistance paths during discharge which produces uneven current distribution and can alter the location of the connector tabs 20, 22, 70 and 72 in the final winding which can make connections difficult. Even winding tension can be accomplished by careful hand winding or by machine winding. Machine winding, which can produce greater battery-to-battery uniformity is preferred. Fig. 14 shows the completed electrode assembly 120 with connector tabs 20, 22, 70 and 72 projecting from the electrode assembly 120. Preferably, the connector tabs 20, 22 associated with the anode are on one side of the electrode assembly 120 while the connector tabs 70, 72 associated with the cathode are spaced apart from the anode connector tabs 20, 22 on the opposite side of the electrode assembly as shown. This helps to avoid inadvertent shorts in the completed battery. Also, preferably, the connector tabs are located such that they are positioned close to their intended connection point with the feedthrough or case and with no overlap between the cathode tabs or between the anode tabs in order to facilitate making the individual welded connections.

Fig. 15 shows the final arrangement of the windings in the electrode assembly 120 together with the mandrel 100 (the separators 25, 75 and current collectors 5, 55 are not shown). Consistent winding of the anode assembly 1 and the cathode assembly 50 will result in an electrode assembly 120 in which the mandrel 100 determines the length of the straight sides of the electrode assembly 120 and in which the final anode layer 125 has alkali metal 15 only facing the cathode material 60. As described above, if the current collector 5 is eliminated in the design, then the final anode layer 125 is simply made of anode material at half of the thickness of the rest of the anode.

Removal of the mandrel 100 will bring the first end 1a of the anode assembly 1 into contact on both sides with the cathode assembly 50 and will complete the electrode assembly 120. It will be appreciated that in order to provide close proximity between anode assembly 1 and cathode assembly 50 at the start of the winding, the mandrel should be very thin. For example, a stainless steel mandrel about 0.25mm (0.010 inch)thick could be used although thicker mandrels could be used if additional stiffness were required.

As will be appreciated by those skilled in the art, the number of windings chosen for the battery will be determined by the required rate of discharge and the required capacity of the battery. Increasing the number of windings will provide an increased ability to discharge at a high rate but will tend to reduce the capacity per unit volume for the battery.

Assembly of the electrode assembly 120 into a battery is shown in Figs. 16-18. In Fig 16, a coil insulator 200 is placed onto the electrode assembly 120. The coil insulator includes a notch 202 to accommodate anode connector tab 22 and slits 204, 206, 208 to accommodate anode connector tab 20, and cathode connector tabs 70, 72 respectively. The electrode assembly 120 is also inserted into an insulative case liner 210. The case liner 210 preferably extends at its top edge above the edge of the electrode assembly 120 in order to provide an overlap with other insulative elements. If so, it may include a notch 211 on one side in order to allow the easy connection of the anode connector tabs 20, 22 to the case 220. The coil insulator 200 and case liner 210 are preferably made from a polyolefin polymer or a fluoropolymer such as ETFE or ECTFE. The electrode assembly 120 and case liner 210 are then inserted into a prismatic case 220, preferably made of stainless steel. In Fig. 17 a case cover 230 and a pin insulator 240 are shown along with the electrode assembly 120 and prismatic case 220. The case cover 230 has a glassed in feedthrough 232 and feedthrough pin 233 extending through an aperture in the case cover 230 that has a bend 234 which is intended to place the feedthrough 232 in alignment with the cathode connector tabs 70, 72. The case cover 230 also has a fill port 236. The case cover 230 is made from stainless steel and the feedthrough pin 233 is preferably niobium or molybdenum. The pin insulator 240 has an aperture 242 leading into a raised portion 244 which receives the feedthrough pin 233 and insulates the feedthrough pin 233 from contact with the case cover 230. In combination with one side of the coil insulator 200, which is immediately below the pin insulator 240, the raised portion forms a chamber which isolates the cathode connections. Additional insulation in the form of tubing or a coating (not shown) may also be included on the feedthrough pin 233 and feedthrough 232 at locations which will not be welded to further insulate the feedthrough pin 233 and feedthrough 232 and also an additional cover insulator (not shown) could be applied to the underside of the case cover 230 to provide additional insulation for the case cover 230. The feedthrough pin 233 is welded to the cathode connector tabs 70, 72 as shown in Fig. 18 and the anode connector tabs 20, 22 are bent into an "L" shape as shown in Fig. 18 and are welded to the side of the case 220 thereby making the metal case 220 one terminal or contact for the battery (i.e. a case negative design). The feedthrough pin 233 is then inserted through a split (not shown) in the pin insulator 240 until it projects through the aperture 242 of the pin insulator 240. The electrode assembly 120 may be out of the case 220 during some of the welding and bending operations. All electrode welding operations should take place in an inert gas atmosphere. The case cover 230 is then welded to the case 220 to seal the electrode assembly 120 in the case.

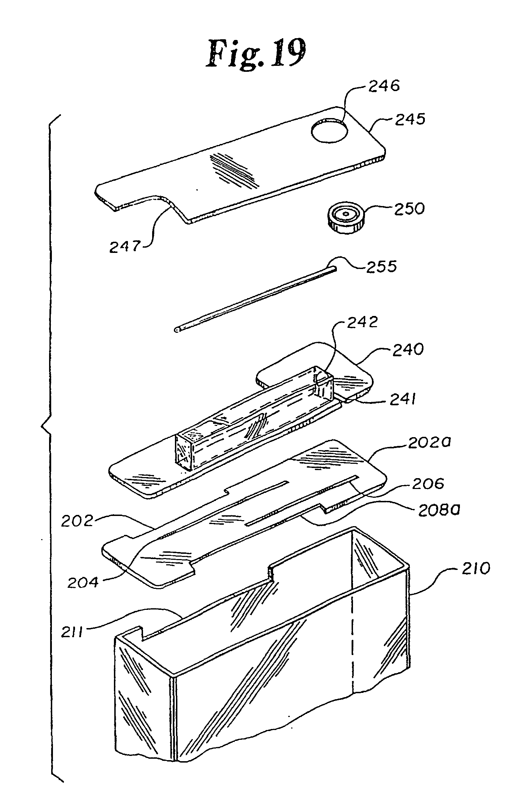

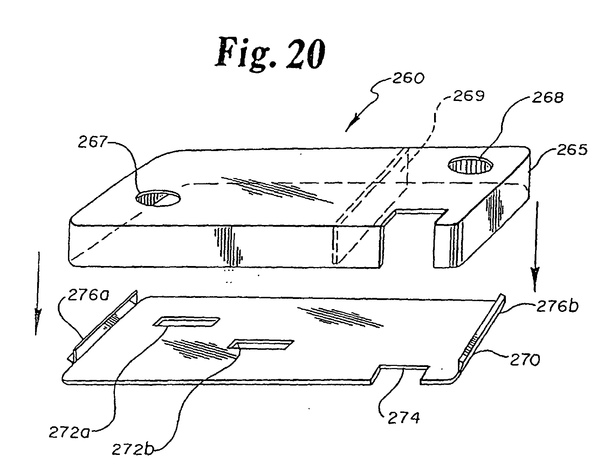

Referring now also to Fig. 19, the isolation components for the battery are shown in greater detail. A cover insulator 245 is adapted to fit under the case cover 230 with an aperture 246 to accommodate the feedthrough 232 and feedthrough pin 233 and a cut-away portion 247 to accommodate the fill port 236. The cover insulator 245 is applied to the underside of the case cover 230. A feedthrough insulator 250 then slides over the feedthrough pin 233 and over the feedthrough 232 into contact with the cover insulator 245. Once the feedthrough insulator 250 is in place, a tubular insulator 255 is slipped over the feedthrough pin 233 until it contacts the glass of the feedthrough 232. The feedthrough pin 233 is then bent into its desired configuration for connection with cathode connector tabs 70, 72 as shown in Fig. 17. The pin insulator 240 is shown with a split 241 which extends from the edge of the pin insulator 240 to the aperture 242. Again, the pin insulator 240 has an aperture 242 leading into a raised portion 244 or recess which receives the feedthrough pin 233 and the tubular insulator 255 over the feedthrough pin and insulates the feedthrough pin 233 from contact with the case cover 230 at the point where the feedthrough pin is welded to the cathode connector tabs 70, 72. The split 241 allows the pin insulator 240 to be placed on the feedthrough pin 233 after the feedthrough pin has been welded to the cathode tabs 70, 72. The tubular insulator 255 therefore extends through the aperture 242, thereby preventing any discontinuity in the isolation of the cathode connector tabs 70, 72 and feedthrough pin 233 from elements at anode potential. A coil insulator 202a is shown with a notch 202 to accommodate anode connector tab 22 and slits 204, 206 to accommodate anode connector tab 20, and cathode connector tab 70 respectively. A notch 208a is also provided to accommodate cathode connector tab 72 in place of the slit 208 shown in Fig. 16. The electrode assembly 120 is also inserted into an insulative case liner 210. All of the case isolation components including the cover insulator 245, the feedthrough insulator 250, the tubular insulator 255, the pin insulator 240, the coil insulator 202a and the case liner 210 are molded or extruded self-supporting polymeric parts preferably made from a polyolefin polymer or a fluoropolymer such as ETFE or ECTFE. The result of this insulator configuration is that the cathode connections are thoroughly isolated from the portions of the battery at anode potential and that the feedthrough connection is thoroughly isolated from stray particles of material from the cathode and from lithium particles that may form during discharge of the battery. It will be appreciated that additional improvements to this insulator configuration can be achieved by improving the fit between insulative components to provide better isolation of anode and cathode elements. For example, the aperture 242 on the pin insulator 240 and the tubular insulator 255 could be sized to be tightly fitting components or the feedthrough pin 233 could be fitted with mating insulator parts that would provide a snap fit which would obviate any migration of stray battery materials through the aperture 242. Alternative configurations of this type can be similar to that shown in Fig. 20. In Fig. 20, a snap fit isolation system 260 is shown which can reduce the number of isolation components in the battery. The snap fit isolation system 260 can consist of two principal components, a top component 265 and a bottom component 270, both components 265, 270 made from insulative plastic material by injection molding. These components 265, 270 can be used to replace components 202a, 240 and, optionally, 245 shown in Fig. 19. The bottom component 270 includes apertures 272a and 272b which can accomodate two cathode connector tabs and a notch 274 which can accomodate an anode connector tab and also provide a passageway from the fill port 236 into the remainder of the battery case to facilitate filling of the battery with electrolyte. Also shown are hooks 276a, 276b which are adapted to mate with the top component 265 to make a secure snap fit between the top component 265 and bottom component 270. Many other structures for making a secure snap fit between components 265, 270 could also be used. Such structures are well known for molded plastic parts. In addition, one of such hooks 276a, 276b could be omitted in favor of a molded hinge which would join one edge of each of the components 265, 270. The top component 265 includes a first apertures 267 adapted to accomodate the feedthrough pin 233 and a second apertures 268 aligned with the fill port 236 in order to allow the electrolyte to fill the battery through the fill port 236. The top component 265 also includes a partition wall 269 which, when the top and bottom components 265, 270 are joined, will separate the cathode connections and the feedthrough pin 233 from the fill port 236 and anode connection (only one anode tab would be used to connect the anode with the case in the embodiment shown) and also isolate the cathode connections and feedthrough pin 233 from other battery components. In essence, by joining the two components 265, 270, a separate compartment is created to house the feedthrough pin 233 and its connections with the cathode tabs.

Alternative embodiments in which the battery is a case positive design or case neutral design can readily be constructed in a like manner. For a case positive design, the cathode connector tabs 70, 72 can be rearranged to be welded to the case 220 while the anode connector tabs 20, 22 can be rearranged to be welded to the feedthrough pin 233. For a case neutral design, an additional feedthrough can be supplied that is connected to the anode connector tabs 20, 22.

An alternative embodiment can also be readily constructed by exchanging the relative positions of the cathode and anode materials. This reverses the electrode assembly construction so that the cathode assembly is made longer than the anode assembly with a portion of the current collector only having cathode material on one side to make up the outer layer of the winding and so that the winding is initiated by bending the cathode assembly over the mandrel. However, the embodiment described in greater detail above is preferred due to better rate capability and volumetric efficiency.

An appropriate electrolyte solution is introduced through the fill port 236 by a vacuum filling process and the fill port 236 is then sealed. The electrolyte solution can be a alkali metal salt in an organic solvent such as a lithium salt (i.e. 1.0M LiClO₄ or LiAsF₆) in a 50/50 mixture of propylene carbonate and dimethoxyethane. The sealing process (not shown) may include, for example, making a first seal by pressing a plug into the aperture of the fill port 236 and making a second seal by welding a cap or disc over the fill port 236. Material utilized for leak checking hermetic seals may be included between the first and second seals.

It will be appreciated by those skilled in the art that while the invention has been described above in connection with particular embodiments and examples, the invention is not necessarily so limited and that numerous other embodiments, examples, uses, modifications and departures from the embodiments, examples and uses may be made without departing from the inventive concepts as claimed in the appended claims.

## Claims

1. An electrode assembly for an electrochemical cell comprising:
(a) an anode (1) including
(1) an elongate strip of alkali metal (10, 15); and
(2) separator material (25) provided on the alkali metal (10, 15); and
(b) a cathode assembly (50) including
(1) a cathode current collector (55); and
(2) a cathode material (60, 65) bonded at a uniform density of reactive material to the current collector (55); **characterised in that** the cathode assembly (50) is shorter than the anode (1), the anode (1) and the cathode assembly (50) being combined with the separator material (25) therebetween, in a flat spiral coil winding with two substantially straight sides, the winding having:
(a) at the innermost portion thereof a portion of the anode (1) folded over the end of the cathode assembly (50) into contact with both sides of the cathode assembly (50), the folded over portion establishing the length of the straight sides of the winding; and
(b) at the outermost portion thereof, the anode (1) wrapped around the cathode assembly.

2. An electrode assembly as claimed in claim 1, wherein
said anode (1) further includes a connector tab (20, 22) in electrical contact with the alkali metal (10, 15) on an edge thereof; and said cathode current collector (55) has on an edge thereof a connector tab (70, 72).

3. An electrode assembly according to any preceding claim further comprising an anode current collector (5).

4. An electrode assembly according to claim 3 wherein the anode current collector (5) is bonded on a first side to a length of alkali metal (10) having a uniform thickness and on a second side to a second length of alkali metal (15) having a uniform thickness.

5. An electrode assembly according to claim 3 or 4 wherein the anode current collector material is selected from the group consisting of nickel, copper and alloys thereof.

6. An electrode assembly according to any preceding claim wherein the cathode current collector material is titanium.

7. An electrode according to any preceding claim wherein the cathode material comprises a solid reactive material, a binder material and a conductivity enhancer.

8. An electrode according to claim 7 wherein the solid reactive material is silver vanadium oxide.

9. An electrode according to claim 7 or 8 wherein the binder material id PTFE.

10. An electrode according to claim 7, 8 or 9 wherein the conductivity enhancer is selected from the group consisting of conductive carbon or graphite.

11. An electrode according to any of claims 2 to 10 wherein the separator material (25) covers the anode (1) and is sealed to provide a pouch around the anode (1), the pouch having an opening through which the connector tab (20, 22) of the anode (1) projects.

12. An electrode according to any of claims 2 to 11 wherein the cathode includes a second connector tab (72) in spaced apart relation from the first connector tab (70).

13. An electrode according to claim 12 wherein the anode connector tab (20, 22) is spaced apart from the cathode connector tabs (70, 72) in the winding.

14. An electrode according to any of claims 2 to 13 wherein the separator material (25) covers the cathode current collector (55) and cathode material and is sealed to provide a pouch around the cathode assembly (50); the pouch having an opening through which the connector tab (70, 72) of the cathode current collector (55) projects.

15. An electrode according to any preceding claim wherein the separator material (25) covers the cathode (50) and is sealed to provide a pouch around the cathode (50) and wherein the separator material (25) also covers the anode (1) and is sealed to provide a pouch around the anode (1); the separator material (25) of each of the anode and cathode pouches comprising half of the thickness of the separator between the anode and the cathode assembly in the winding.

16. An electrode according to any preceding claim wherein the separator material (25) is a microporous polyolefin.

17. A method for making an electrode assembly for an electrochemical cell comprising the steps of:
(a) providing an anode (1) comprising an elongate alkali metal strip;
(b) pressing a porous separator material (25) into the anode (1);
(c) providing a cathode assembly (50) comprising a second metal strip with a reactive cathode material bonded to it at a uniform density of reactive material; and
(d) winding the anode (1) and the cathode (50) assembly together, into a flat spiral coil;
**characterised in that**
the winding step also includes the steps of:
(i) placing a flat mandrel (100) against one side of the cathode assembly (50) such that a first end of the mandrel (100) is aligned with an end of the cathode assembly (50);
(ii) placing a separator material (25) around the cathode assembly (50) such that it is wound between the anode and cathode assembly (50),
(iii) placing the anode (1) against the cathode assembly (50) on a side of the cathode opposite to that against the mandrel (100) such that the first end (1a) of the anode (1) extends beyond the end (50a) of the cathode assembly (50) by substantially the same amount as the length of the mandrel (100);
(iv) bending the anode (1) over the end of the cathode assembly (50) and over the end of the mandrel (100) such that the anode (1) is against the mandrel (100) on a side of the mandrel opposite to the side of the mandrel against the cathode assembly (50);
(v) bending both the anode (1) and cathode assembly (50) around the mandrel (100) at a second end of the mandrel until it rests against the anode (1);
(vi) continuing to wind the anode (1) and cathode assembly (50) around the mandrel (100) in the same direction until the second end of the anode (1) is brought against the winding to complete the winding;
(vii) removing the mandrel (100) from the completed winding.

## Patentansprüche

1. Elektrodenbaueinheit für eine elektrochemische Zelle, die aufweist:
(a) eine Anode (1) mit:
(1) einen länglichen Streifen aus einem Alkalimetall (10, 15); und
(2) Trennmaterial (25), das auf dem Alkalimetall (10, 15) vorgesehen ist; und
(b) eine Katodenbaueinheit (50), mit:
(1) einem Katodenstromkollektor (55); und
(2) einem Katodenmaterial (60, 65), das mit einer gleichmäßigen Dichte aus reaktivem Material an den Strom-Kollektor (55) geklebt ist; **dadurch gekennzeichnet, dass** die Katodenbaueinheit (50) kürzer als die Anode (1) ist, wobei die Anode (1) und die Katodenbaueinheit (50) mit dem dazwischen befindlichen Trennmaterial (25) zu bzw. in einer flachen, spiralförmigen Spulenwicklung mit zwei im Wesentlichen geraden Seiten kombiniert sind, wobei die Wicklung aufweist:
(a) in ihrem innersten Abschnitt einen Abschnitt der Anode (1), der über das Ende der Katodenbaueinheit (50) in einen Kontakt mit beiden Seiten der Katodenbaueinheit (50) gefaltet ist, wobei der gefaltete Abschnitt die Länge der geraden Seiten der Wicklung bildet; und
(b) in ihrem äußersten Abschnitt die Anode (1), die um die Katodenbaueinheit gewickelt ist.

2. Elektrodenbaueinheit nach Anspruch 1, bei der
die Anode (1) ferner einen Verbindungsstecker (20, 22) enthält, der an einer seiner Kanten mit dem Alkalimetall (10, 15) in elektrischem Kontakt ist; und der Katodenstromkollektor (55) an einer seiner Kanten einen Verbindungsstecker (70, 72) besitzt.

3. Elektrodenbaueinheit nach einem der vorhergehenden Ansprüche, die ferner einen Anodenstromkollektor (5) umfasst.

4. Elektrodenbaueinheit nach Anspruch 3, bei der der Anodenstromkollektor (5) mit einer ersten Seite an einen Abschnitt des Alkalimetalls (10), der eine gleichmäßige Dicke besitzt, und mit einer zweiten Seite an einen zweiten Abschnitt des Alkalimetalls (15), der eine gleichmäßige Dicke besitzt, geklebt ist.

5. Elektrodenbaueinheit nach Anspruch 3 oder 4, bei der das Material für den Anodenstromkollektor aus der Gruppe gewählt ist, die aus Nickel, Kupfer und Legierungen hiervon besteht.

6. Elektrodenbaueinheit nach einem der vorhergehenden Ansprüche, bei der das Material des Katodenstromkollektors Titan ist.

7. Elektrode nach einem der vorhergehenden Ansprüche, bei der das Katodenmaterial ein festes reaktives Material, ein Bindematerial und einen Leitfähigkeitsverstärker umfasst.

8. Elektrode nach Anspruch 7, bei der das feste reaktive Material Silbervanadiumoxid ist.

9. Elektrode nach Anspruch 7 oder 8, bei der das Bindematerial PTFE ist.

10. Elektrode nach Anspruch 7, 8, 9 bei der der Leitfähigkeitsverstärker aus der Gruppe gewählt ist, die aus leitendem Kohlenstoff oder Graphit besteht.

11. Elektrode nach einem der Ansprüche 2 bis 10, bei der das Trennmaterial (25) die Anode (1) abdeckt und abgedichtet ist, um um die Anode (1) eine Tasche zu bilden, die eine Öffnung besitzt, durch die der Verbindungsstecker (20, 22) der Anode (1) vorsteht.

12. Elektrode nach einem der Ansprüche 2 bis 11, bei der die Katode einen zweiten Verbindungsstecker (72) enthält, der von dem ersten Verbindungsstecker (70) beabstandet ist.

13. Elektrode nach Anspruch 12, bei der der Anoden-Verbindungsstecker (20, 22) von den Katoden-Verbindungssteckern (70, 72) in der Wicklung beabstandet ist.

14. Elektrode nach einem der Ansprüche 2 bis 13, bei der das Trennmaterial (25) den Katodenstromkollektor (55) und das Katodenmaterial abdeckt und abgedichtet ist, um um die Katodenbaueinheit (50) eine Tasche zu bilden; wobei die Tasche eine Öffnung besitzt, durch die der Verbindungsstecker (70, 72) des Katodenstromkollektors (55) vorsteht.

15. Elektrode nach einem der vorhergehenden Ansprüche, bei der das Trennmaterial (25) die Katode (50) abdeckt und abgedichtet ist, um um die Katode (50) eine Tasche zu bilden, und bei der das Trennmaterial (25) außerdem die Anode (1) abdeckt und abgedichtet ist, um um die Anode (1) eine Tasche zu bilden; wobei das Trennmaterial (25) sowohl der Anoden- als auch der Katodentasche jeweils die halbe Dicke des Trennmaterials zwischen der Anode und der Katodenbaueinheit in der Wicklung aufweist.

16. Elektrode nach einem der vorhergehenden Ansprüche, bei der das Trennmaterial (25) mikroporöses Polyolefin ist.

17. Verfahren zum Herstellen einer Elektrodenbaueinheit für eine elektrochemische Zelle, das die folgenden Schritte umfasst:
(a) Bereitstellen einer Anode (1), die einen lang gestreckten Alkalimetallstreifen enthält;
(b) Pressen eines porösen Trennmaterials (25) in die Anode (1);
(c) Vorsehen einer Katodenbaueinheit (50), die einen zweiten Metallstreifen enthält, an den ein reaktives Katodenmaterial geklebt ist, wobei das reaktive Material eine gleichmäßige Dichte besitzt; und
(d) Wickeln der Anode (1) und der Katodenbaueinheit (50) zu einer flachen, spiralförmigen Spule;
**dadurch gekennzeichnet, dass**
der Wicklungsschritt außerdem die folgenden Schritte umfasst:
(i) Anordnen eines flachen Dorns (100) an einer Seite der Katodenbaueinheit (50), so dass ein erstes Ende des Dorns (50) auf ein Ende der Katodenbaueinheit (50) ausgerichtet ist;
(ii) Anordnen eines Trennmaterials (25) um die Katodenbaueinheit (50), so dass es zwischen der Anode und der Katodenbaueinheit (50) gewickelt ist,
(iii) Anordnen der Anode (1) an der Katodenbaueinheit (50) auf derjenigen Seite der Katode, die sich gegenüber jener des Dorns (50) befindet, so dass sich das erste Ende (1a) der Anode (1) im Wesentlichen um einen Betrag, der gleich der Länge des Dorns (100) ist, über das Ende (50a) der Katodenbaueinheit (50) hinaus erstreckt;
(iv) Biegen der Anode (1) über das Ende der Katodenbaueinheit (50) und über das Ende des Dorns (100), so dass die Anode (1) auf derjenigen Seite des Dorns (100) an diesem anliegt, die sich gegenüber jener Seite des Dorns befindet, die an der Katodenbaueinheit (50) anliegt;
(v) Biegen sowohl der Anode (1) als auch der Katodenbaueinheit (50) um den Dorn (100) an einem zweiten Ende des Dorns, bis er an der Anode (1) anliegt; (vi) Fortsetzen des Wickelns der Anode (1) und der Katodenbaueinheit (50) um den Dorn (100) in derselben Richtung, bis das zweite Ende der Anode (1) an der Wicklung anliegt, um die Wicklung fertigzustellen;
(vii) Entfernen des Dorns (100) aus der fertig gestellten Wicklung.

## Revendications

1. Ensemble d'électrodes pour une cellule électrochimique comprenant:
(a) une anode (1) incluant
(1) une bande allongée d'un métal alcalin (10, 15); et
(2) un matériau formant séparateur (25) prévu sur le métal alcalin (10, 15); et
(b) un ensemble de cathode (50) incluant
(1) un collecteur de courant de cathode (55); et
(2) un matériau de cathode (60, 65) fixé, avec une densité uniforme du matériau réactif, au collecteur de courant (55) ;
**caractérisé en ce que** l'ensemble de cathode (50) et plus court que l'anode (1), l'anode (1) et l'ensemble de cathode (50) étant combinés au matériau formant séparateur (25) disposé entre eux, dans un enroulement de bobine spirale plate comportant deux côtés essentiellement rectilignes, l'ensemble possédant:
(a) dans sa partie la plus inférieure, une partie de l'anode (1) repliée sur l'extrémité de l'ensemble de cathode (50), en contact avec les deux côtés de l'ensemble de cathode (50), la partie repliée déterminant la longueur des côtés rectilignes de l'enroulement; et
(b) dans sa partie la plus extérieure, l'anode (1) enroulée autour de l'ensemble de cathode.

2. Ensemble d'électrodes selon la revendication 1, dans lequel
ladite anode (1) comporte en outre une patte de connecteur (20, 22) en contact électrique avec le métal alcalin (10, 15) au niveau d'un bord de ce dernier; et ledit collecteur de courant de cathode (55) comporte, sur un bord extérieur, une patte de connecteur (70, 72).

3. Ensemble d'électrodes selon l'une quelconque des revendications précédentes, comprenant en outre un collecteur de courant d'anode (5).

4. Ensemble d'électrodes selon la revendication 3, dans lequel le collecteur de courant d'anode (5) est fixé sur un premier côté à une longueur du métal alcalin (10) possédant une épaisseur uniforme et, sur un second côté, à une seconde longueur du métal alcalin (15) possédant une épaisseur uniforme.

5. Ensemble d'électrodes selon la revendication 3 ou 4, dans lequel le matériau formant collecteur de courant d'anode est choisi dans le groupe comprenant du nickel, du cuivre et des alliages de ces derniers.

6. Ensemble d'électrodes selon l'une quelconque des revendications précédentes, dans lequel le matériau du collecteur de courant de cathode est le titane.

7. Ensemble d'électrodes selon l'une quelconque des revendications précédentes, dans lequel le matériau de cathode comprend un matériau réactif solide, un matériau formant liant et un amplificateur de conductivité.

8. Electrode selon la revendication 7, dans laquelle le matériau réactif solide est de l'oxyde d'argent et de vanadium.

9. Electrode selon la revendication 7 ou 8, dans laquelle le matériau formant liant est du PTFE.

10. Electrode selon la revendication 7, 8 ou 9, dans laquelle l'amplificateur de conductivité est choisi dans le groupe comprenant le carbone ou le graphite conducteur.

11. Electrode selon l'une quelconque des revendications 2 à 10, dans laquelle le matériau formant séparateur (25) recouvre l'anode (1) et est scellé de manière à former une poche autour de l'anode (1), la poche possédant une ouverture par laquelle la patte de connecteur (20, 22) de l'anode (1) fait saillie.

12. Electrode selon l'une quelconque des revendications 2 à 11, dans laquelle la cathode comprend une seconde patte de connecteur (72), qui est distante de la première patte de connecteur (70).

13. Electrode selon la revendication 12, dans laquelle la patte de connecteur d'anode (20, 22) est distante des pattes de connecteur de cathode (70, 72) dans l'enroulement.

14. Electrode selon l'une quelconque des revendications 2 à 13, dans laquelle le matériau formant séparateur (25) recouvre le collecteur (55) de courant de cathode et le matériau de la cathode est scellé de manière à former une poche autour de l'ensemble de cathode (50); la poche possédant une ouverture, par laquelle la patte de connecteur (70, 72) du collecteur de courant de cathode (55) fait saillie.

15. Electrode selon l'une quelconque des revendications précédentes, dans laquelle le matériau séparateur (25) recouvre la cathode (50) et est scellé de façon étanche de manière à former un poche autour de la cathode (50) et dans laquelle le matériau formant séparateur (25) recouvre également l'anode (1) et est scellé de manière à former une poche autour de l'anode (1); le matériau formant séparateur (25) de chacune des poches de l'anode et de la cathode occupant la moitié de l'épaisseur du séparateur entre l'anode et l'ensemble de cathode dans l'enroulement.

16. Electrode selon l'une quelconque des revendications précédentes, dans laquelle le matériau formant séparateur (25) est une polyoléfine microporeuse.

17. Procédé pour fabriquer un ensemble d'électrode pour une pile électrochimique comportant les étapes consistant à:
(a) prévoir une anode (1) comprenant une bande de allongée de métal alcalin;
(b) repousser un matériau poreux formant séparateur (25) dans l'anode (1);
(c) prévoir un ensemble de cathode (50) comprenant une seconde bande métallique à laquelle est fixé un matériau réactif de cathode, avec une densité uniforme du matériau réactif; et
(d) enrouler l'ensemble comprenant l'anode (1) et la cathode (50), pour former une bobine spirale plate;
**caractérisé en ce que** l'étape d'enroulement comprend également les étapes consistant à:
(i) placer un mandrin plat (100) contre un côté de l'ensemble de cathode (50) de telle sorte qu'une première extrémité du mandrin (100) est alignée avec une extrémité de l'ensemble de cathode (50); et
(ii) placer un matériau formant séparateur (25) autour de l'ensemble de cathode (50) de telle sorte qu'il est enroulé entre l'anode et l'ensemble de cathode (50);
(iii) placer l'anode (1) contre l'ensemble de cathode (50) sur un côté de la cathode située à l'opposé du côté situé contre le mandrin (100) de telle sorte que la première extrémité (1a) de l'anode (1) s'étend au-delà de l'extrémité (50a) de l'ensemble de cathode (50) essentiellement sur une étendue égale à la longueur du mandrin (100);
(iv) replier l'anode (1) sur l'extrémité de l'ensemble de cathode (50) et sur l'extrémité du mandrin (100) de telle sorte que l'anode (1) s'applique contre le mandrin (100) sur un côté du mandrin situé à l'opposé du côté du mandrin contre l'ensemble de cathode (50);
(v) replier à la fois l'anode (1) et l'ensemble de cathode (50) autour du mandrin (100) au niveau d'une seconde extrémité du mandrin jusqu'à ce qu'il soit en appui contre l'anode (1) ;
(vi) continuer à enrouler l'anode (1) et l'ensemble de cathode (50) autour du mandrin (100) dans la même direction jusqu'à ce que la seconde extrémité de l'anode (1) soit amenée contre l'enroulement de manière à compléter l'enroulement;
(vii) retirer le mandrin (100) de l'enroulement terminé.
